# EUROPEAN PATENT APPLICATION

(11) **EP 2 728 177 A1**
(43) Date of publication of application: **07.05.2014**
(21) Application number: 12804480.7
(22) Date of filing: 28.06.2012
(51) Int. Cl.: F03D 7/04

(54) **WINDMILL REPAIR TIMING DETERMINATION SUPPORT DEVICE AND REPAIR TIMING DETERMINATION SUPPORT METHOD**

(30) Priority: 29.06.2011 JP 2011144443
(71) Applicant: Mitsubishi Heavy Industries, Ltd., Tokyo 108-8215 (JP)
(72) Inventor: NAKAMURA Shigeaki, Tokyo 108-8215 (JP); DAIGO Katsuya, Tokyo 108-8215 (JP); BABA Mitsuya, Tokyo 108-8215 (JP)
(74) Representative: Intès, Didier Gérard André
(86) International application number: PCT/JP2012/066509
(87) International publication number: WO 2013/002316

(57) **Abstract**

Selecting work timing advantageous in cost with ensuring the soundness of the wind turbine generator is desired. The estimated value of the repair cost for a part of a wind turbine in time-series from an abnormality occurrence of the part is calculated in a case where the wind turbine operates at a first output and at a smaller second output. The estimated value of the electricity selling income of the wind turbine is calculated in cases of the first output and the second output. By referring to the repair cost estimated value and the electricity selling income estimated value, the total surplus/deficit from the abnormality occurrence to the repair of the part are calculated and outputted for each of the first and second outputs and for a plurality of repair timings. The output and repair timing at which the total surplus/deficit becomes optimal can be recognized.

## Description

### Technical Field

The present invention relates to a technique for determining an appropriate repair timing of a wind turbine.

### Background Art

When a trouble occurs in main parts for a wind turbine generator apparatus such as a bearing, a gearbox, an electric power generator and the like which are used in a wind turbine generator, it is required to stop the operation of the wind turbine generator apparatus until the work of replacement or repair of the part in trouble (a maintenance operation) is finished, which results in a problem that the electricity selling income is decreased.

Further, in a case where the procedure of replacement or repair of a part is performed after the part became in trouble, the stop period of the wind turbine generator apparatus from the trouble to the recovery becomes longer, which results in a problem of further decreasing of the electricity selling income.

For the purpose of solving the above problem, in Patent Literature 1, a technique for a monitoring apparatus of wind turbine generator equipment is described. In the technique, the trouble of a part is predicted in advance, by determining whether or not the actual operation condition reaches the operation amount at which maintenance is required, based on: the actual operation history of the wind turbine generator equipment obtained by an operation state monitoring means; and the maintenance condition of the wind turbine equipment set in advance. By performing maintenance of the wind turbine generator apparatus in accordance with the estimation result, it is possible to reduce the stop period of the wind turbine generator apparatus.

### Citation List

### [Patent Literature]

Patent Literature 1: Japanese Patent Application Publication JP2006-342766A

### Summary of the Invention

The wind condition varies depending on the seasons, and a strong wind tends to blow in winter. Therefore, in the wind turbine generator, the power generation amount has a tendency to be larger in winter, and be small in summer. As a result, if the wind turbine generator apparatus is stopped for maintenance in winter, the decrease amount of the electricity selling income is large. It is desired to reduce the maintenance which requires the stop of the wind turbine generator apparatus in winter, with ensuring the soundness of the wind turbine generator apparatus.

Further, main parts of a wind turbine generator apparatus are installed mainly in high places, such as the nacelle mounted on the upper edge of the tower installed on the bedding, the rotor head mounted on the nacelle, and the like. Therefore, for implementing a work for repairing or replacing parts of the wind turbine generator apparatus, work in high places using crane equipment and the like is required.

However, the wind turbine generator apparatus is an apparatus for transforming the wind power into the electric power, so that it is installed in a windy location. Further, as mentioned above, main parts of the wind turbine generator apparatus are installed in high places, which is exposed to wind.

Therefore, there is a case where crane equipment and the like cannot be used caused by the influence of the wind. Depending on the season, there are date and hour when a work cannot be implemented, so that the work period becomes longer. In such a case, the period of stopping the wind turbine generator apparatus becomes longer.

Further, when the work period of a wind turbine generator apparatus becomes longer, the cost for using crane equipment (namely, the rental fee of crane equipment) and the like increases, so that there is a case where the work cost is also increased.

In particular, a strong wind tends to blow in winter. Therefore, when a work for maintenance is implemented in winter, the work period tends to be longer, and the work cost tends to increase. Also from the viewpoint of the work cost, the maintenance in winter is desired to be decreased.

The present invention is invented from the above backgrounds, and an object of the present invention is to provide a work timing selection apparatus and a work timing selection method which enables the specification of an appropriate timing for implementing a work for a wind turbine generator apparatus.

According to an aspect of the present invention, a repair timing determination support apparatus includes: a repair cost storage section configured to store a repair cost estimation value being a time-series estimation value of a cost for repairing a part of a wind turbine from an occurrence of a predetermined behavior of the part to a repair of the part for a case where the wind turbine operates at a first output and a case where the wind turbine operates at a second output lower than the first output; an electricity selling income storage section configured to store an electricity selling income estimation value being a time-series estimation value of an income from electricity selling of an electricity generated by the wind turbine for a case of the first output and a case of the second output; and a total surplus/deficit calculation section configured to calculate and output a total surplus/deficit from the occurrence of the predetermined behavior to the repair of the part for a case where the wind turbine operates at the first output and a case where the wind turbine operates at the second output at a plurality of repairing candidate timings by referring to the repair cost storage section and the electricity selling income storage section.

According to another aspect of the present invention, a repair timing determination support method includes: a repair cost calculation step of calculating a repair cost estimation value being a time-series estimation value of a cost for repairing a part of a wind turbine from an occurrence of a predetermined behavior of the part to a repair of the part for a case where the wind turbine operates at a first output and a case where the wind turbine operates at a second output lower than the first output; an electricity selling income calculation step of calculating an electricity selling income estimation value being a time-series estimation value of an income from electricity selling of an electricity generated by the wind turbine for a case of the first output and a case of the second output; and a total surplus/deficit calculation step of calculating and outputting a total surplus/deficit from the occurrence of the predetermined behavior to the repair of the part for a case where the wind turbine operates at the first output and a case where the wind turbine operates at the second output at a plurality of repairing candidate timings by referring to the repair cost estimation value and the electricity selling income estimation value.

According to the present invention, a repair timing determination support apparatus and a repair timing determination support method which enable the selection of work timing which is advantageous in cost with ensuring the soundness of the wind turbine generator apparatus.

### Brief Description of the Drawings

The above objects, other objects, effects, and characteristics of the present invention will become clearer by the description of embodiments with the accompany drawings, in which:
Fig. 1 shows a wind turbine, a remote monitoring apparatus, and a repair timing determination support apparatus;
Fig. 2 is a functional block diagram of the repair timing determination support apparatus;
Fig. 3 shows repair cost data;
Fig. 4 shows repair cost data;
Fig. 5 shows electricity selling income data;
Fig. 6 shows work cost data;
Fig. 7 is a flowchart of a repair timing determination support method; and
Fig. 8 shows an example of a repair cost curve.

### Description of Embodiments

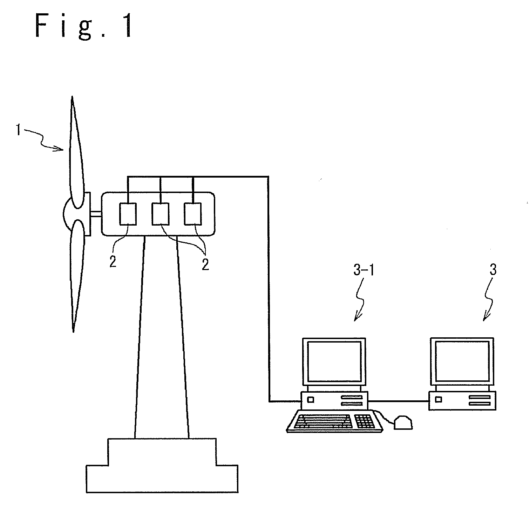

Some embodiments of the present invention will be explained below. Fig. 1 shows a wind turbine 1. Though the wind turbine 1 of the present embodiment is an upwind type, it may be a wind turbine of other types such as a downwind type wind turbine. A nacelle is mounted on a tower such that its rotation angle around a vertical line being its center axis can be controlled. A main shaft is mounted on the nacelle such that it is rotatable around a rotation axis, which is arranged approximately in the horizontal direction, as its center, and a rotor head is mounted on the main shaft. Around the rotation axis as the center, a plurality of blades are mounted at a predetermined pitch in the circumferential direction of the rotor head. The main shaft is rotated by receiving wind by the blades. The wind power generation is performed by increasing the rotation speed of the main shaft by a gearbox in the nacelle and by rotating the main shaft of an electricity generator. The produced electric power is subjected to the power conversion and the connection with the system to be sold.

A monitoring apparatus 2 is mounted on the wind turbine 1. As the monitoring apparatus 2, for example, a vibration sensor which detects the vibration of the bearing of the gearbox, or a metal scan (a wear particle detecting apparatus) 60 of an oil lubrication apparatus which supplies oil to various bearings is mounted. The vibration sensor detects the vibration generated at a bearing, and the metal scan detected the amount of the wear particles in the oil lubrication apparatus.

The operation of the vibration sensor or the metal scan is controlled by the data collection apparatus 62 installed in each wind turbine 1.

In particular, the data collection apparatus operates the vibration sensor or the metal scan at a predetermined interval (for example, one time in a day and about five minutes), and receives the input of the detection signal from the vibration sensor or the metal scan. When the detection signal is inputted, the data collection apparatus performs an analysis based on the detection signal, and transmits the result of the analysis to the remote monitoring apparatus 3-1 via a communication apparatus and a communication line (for example, the Internet) as a part state data. Here, the data collection apparatus and the communication apparatus are installed in the nacelle or in the tower, for example.

The remote monitoring apparatus 3-1 includes a storage device such as an HDD (Hard Disk Drive) and stores a remote monitoring database in the storage device. In the remote monitoring database, the part state data transmitted from the data collection apparatus is stored in time-series and represented in a table format for every wind turbine power generation apparatus and for every main part.

A state monitoring apparatus is connected to the remote monitoring apparatus 3-1. The state monitoring apparatus diagnoses the state of each main part mounted on the wind turbine power generator apparatus based on the contents of the remote monitoring database stored in the storage device of the remote monitoring apparatus 3-1, and stores the state monitoring database which represents the diagnosis results for every main part in the storage device. The diagnosis of the state of a main part means that estimating the timing at which a trouble occurs for the main part, or outputting the abnormality level suggested by the predetermined detected behavior, based on the time variation of the detection signal outputted by the state detection apparatus (for example, a vibration sensor or a metal scan) which detects the state of the main parts mounted on the wind turbine power generation apparatus.

The state monitoring apparatus further diagnoses the state of main parts as follows. It is assumed that, for a certain part, the relation between the state detected by the monitoring apparatus 2 and the required maintenance level is determined. For example, it is assumed to be predetermined that the state is normal at the level 0, a slight maintenance is required at the level I, a medium level maintenance is required at the level II, and a part replacement is required at the level III. The state monitoring apparatus determines the maintenance level for each part based on the detection signal of the monitoring apparatus 2 in accordance with a predetermined standard. The repair cost of each part is determined by its maintenance level.

A repair timing determination support apparatus 3 is connected to the remote monitoring apparatus 3-1. When an abnormality occurs for a part of the wind turbine 1, there is a case that an instant repair is not required and it can be further operated in a certain period. If a trouble is detected in winter, since the electricity selling income is large in winter, stopping the operation for repairing the part is not preferred. In such a case, the repair cost may be reduced by decreasing the output of the wind turbine 1 for reducing the load on the part and postponing the repair of the part which requires the stopping of the wind turbine 1 to the timing when the electricity selling income is relatively small. The repair timing determination support apparatus 3 performs the calculation for determining the repair timing at which the cost becomes low.

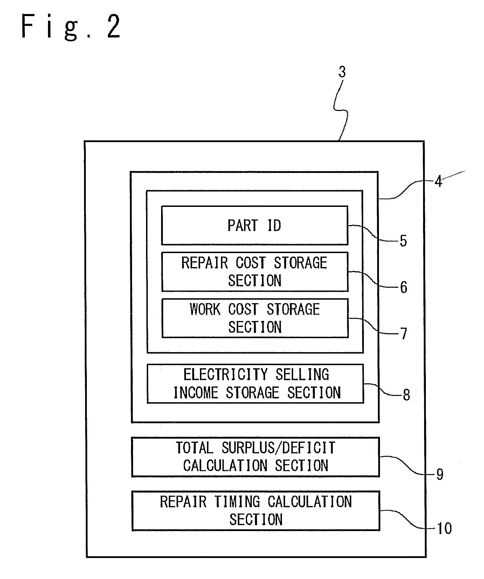

Fig. 2 is a functional block diagram of the repair timing determination support apparatus 3. The repair timing determination support apparatus 3 includes a database 4, a total surplus/deficit calculation section 9, and a repair timing calculation section 10. This repair timing determination support apparatus 3 can be realized by a computer such as a PC or a server similarly to the remote monitoring apparatus 3-1 or the state monitoring apparatus. The total surplus/deficit calculation section 9 and the repair timing calculation section 10 can be realized by a CPU reading out and executing a program preliminary stored in a non-transitory storing medium such as a disk apparatus.

In the database 4, a part ID 5, a repair cost storage section 6, a work cost storage section 7, and an electricity selling income storage section 8 are stored. The part ID 5 stores an identifier which specifies each part whose state is monitored by the monitoring apparatus 2. The repair cost storage section 6 represents the repair cost of each part specified by the part ID 5 in time-series. The work cost storage section 7 indicates the work cost for each part specified by the part ID 5 in time-series. The electricity selling income storage section 8 stores an estimated value of the electricity income which depends on the season.

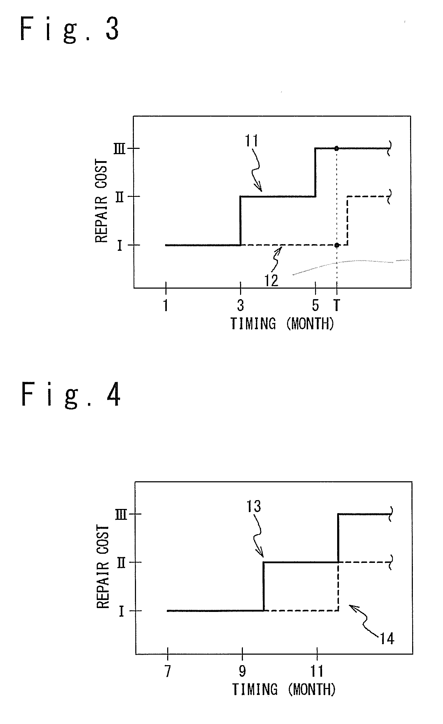

Next, the data stored in the repair cost storage section is explained in detail. Fig. 3 shows an example of the repair cost data stored in the repair cost storage section 6. The horizontal axis indicates the season. The vertical axis indicates the repair cost. Fig. 3 is an example of the repair cost data used in a case where the state monitoring apparatus detects a trouble corresponding to the level I in January.

The repair cost curve 11 indicates the estimated repair cost after the level I state is detected in January in a case where the rated operation of the wind turbine 1 is continued. The repair cost curve 12 in lower right indicates the estimated repair cost after the level I trouble is detected in a case where the wind turbine 1 is operated in the safe mode in which the output is decreased by a predetermined percentage (for example, the output of 90%).

In a case where the rated operation is continued without implementing a maintenance work for the part after the level I state is detected in January, In Fig. 3, it is estimated that the state of the part becomes level II in March, and level III in May. Therewith, the repair cost increases in March, and further increases in May. On the other hand, in a case where the output is decreased to 90%, the load on a bearing, a gear and the like is reduced, so that the deterioration of the part is relaxed. In the repair cost curve 13 in Fig. 3, in a case where the output is decreased to 90% after the level I state is detected in January, the state is estimated to be level II in the period near after May. Therefore, if the repair is implemented at a timing T just after May, the repair cost can be suppressed by (the repair cost for level III) - (the repair cost for level I). These repair cost curves 11, 12 are preliminary registered in the repair cost storage section 6 based on past experiences.

Fig. 4 shows the estimated value of the repair cost when the level I state is detected in different seasons for a part same to the case of Fig. 3. A wind turbine power generation apparatus has a tendency that the output becomes large in winter, so that the load on the part has a seasonal variation, which is heavy in winter. Therefore, the repair cost curve varies depending on the season. In the example of Fig. 4, in a case where the level I state is detected in July and the rated operation is continued, the repair cost curve 13 is estimated to be level II in October, and level III in December. If the level I state is detected in July, and the operation is continued with the output decreased to 90%, the level II state is estimated in December as represented by the repair cost curve 14. As shown in Fig. 3 and Fig. 4, it is preferable to preliminary register two or more repair cost curves whose trouble occurrence timing is different from each other in the repair cost storage section 6. The repair cost storage section 6 stores the future estimation values of the repair costs such as shown in Fig. 3 and Fig. 4 for each part being a monitoring target of the monitoring apparatus 2.

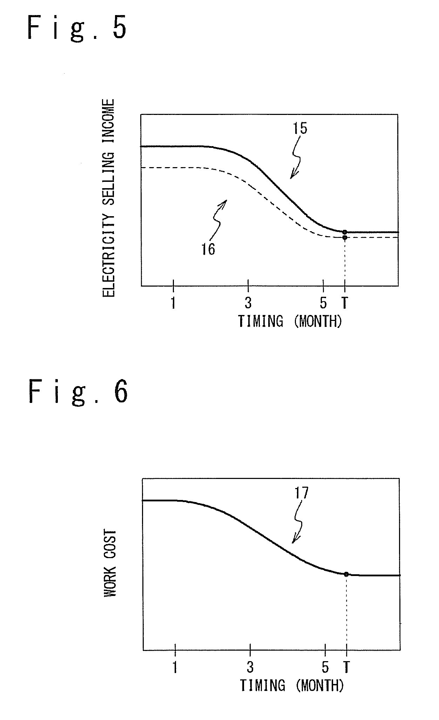

Fig. 5 shows an example of data stored in the electricity selling income storage section 8. The horizontal axis indicates the season, and the vertical axis indicates the income. The electricity selling income curve 15 indicates the estimated value of the electricity selling income under the rated operation. The output of the wind turbine 1 has a tendency to become large in winter, and the electricity selling income curve 15 reflects the variation depending on the season. The lower electricity selling income curve 16 indicates the estimated value of the electricity selling income when the wind turbine 1 is operated at the output of 90%. The estimated values of the electricity selling income determined based on the past actual performance or the like are preliminary stored in the electricity selling income storage section 8 for each wind turbine 1.

Fig. 6 shows an example of data stored in the work cost storage section 7. The horizontal axis indicates the season, and the vertical axis indicates the cost of the work for repairing a part. The work cost curve 17 indicates the estimated value of the work cost. The work cost has a tendency to be larger in winter, and the work cost curve 17 reflects the variation depending on the season. The estimated values of the work cost being determined based on past experiences are preliminary stored in the work cost storage section 7.

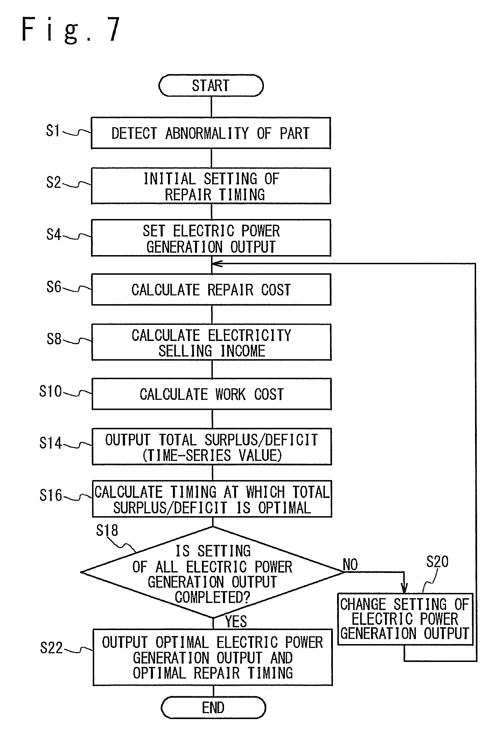

Next, an operation of the repair timing determination support apparatus 3 having the above-explained structure is explained. Fig. 7 is a flowchart of a repair timing determination support method according to the present embodiment.

STEP S1: The monitoring apparatus 2, when an abnormality of a part is detected, transmits an abnormality detection signal which indicates the part ID specifying the part, the degree of the abnormality, and the type of the abnormality to the repair timing determination support apparatus 3.

STEP S2: The repair timing determination support apparatus 3, when the abnormality detection signal is received, performs the initial setting of the repair timing. The time information such as the present year, month, and day is inputted by a built-in calendar function, or by an inputting operation to the input device by an operator.

STEP S4: The setting of the power generation output is performed. For example, the rated operation (100% output) is set as the initial setting.

STEP S6: The total surplus/deficit calculation section 9 performs the calculation of the repair cost. By this calculation, future repair costs are calculated at a predetermined time interval (for example, per month). The total surplus/deficit calculation section 9 refers to the database 4 and reads out the repair cost corresponding to the part ID 5 indicated by the abnormality detection signal from the repair cost storage section 6. At this stage, a plurality of future timings (the total surplus/deficit estimation timings) which become targets of the estimated value calculation of the total surplus/deficit are set. For example, in a case where the set timing is January and the preliminary set calculation period is 6 months at STEP S2, the estimated value of the repair cost of each month from January to July is read out. As a result, with regard to the power generation output set at the STEP S4, the repair cost curve as shown in Fig. 3 is read out.

STEP S8: The total surplus/deficit calculation section 9 calculates the electricity selling income. By this calculation, the future electricity selling income is calculated at a predetermined time interval (for example, every month). The total surplus/deficit calculation section 9 refers to the database 4 and reads out the estimated value of the electricity selling from the electricity selling income storage section 8. Also with respect to this electricity selling income, similarly to the repair cost, the estimated value for each month from January to July is read out, for example. As a result, with respect to the power generation output set at the STEP S4, the electricity selling income curve as shown in Fig. 5 is read out. The total surplus/deficit calculation section 9 further calculates the values of integral of the estimated values of the electricity selling income from the present time to each of the plurality of future estimation timings. By this calculation, in a case where the present time is January for example, the estimated values of the summation of the electricity selling incomes until respective months between February and July are obtained.

STEP S10: The total surplus/deficit calculation section 9 performs a calculation of the work cost. By this calculation, the future work costs are calculated at a predetermined time interval (for example, per month). The total surplus/deficit calculation section 9 refers to the database 4 and reads out the work cost corresponding to the part ID 5 indicated by the abnormality detection signal from the work cost storage section 6. With respect to this work cost, similarly to the repair cost, the estimated value of each month from January to July, for example, is read out. As a result, with respect to the power generation output set at the STEP S4, the repair cost curve as shown in Fig. 4 is read out.

STEP S14: The total surplus/deficit calculation section 9 calculates the estimation values of the future surplus/deficit in time-series by summing the respective estimated values in time-series of: the repair cost calculated at the STEPs S6 to S10; the values of integral of the electricity selling income; and the work cost, and outputs the calculation result as the total surplus/deficit curve. An operator can determine the repair timing of the part by referring to the estimated value of the total surplus/deficit in time-series corresponding to the power generation output set at the STEP S4.

STEP S16: The repair timing calculation section 10 selects the estimated value at which the total surplus/deficit is best, namely, the surplus is the largest or the deficit is the smallest, among the estimated value of the total surplus/deficit in time-series, and extracts the timing corresponding to the selected estimated value. Consequently, a timing at which the repair cost and the work cost are relatively small, and the value of integral of the electricity selling income is relatively large, can be automatically selected.

STEP S18: The repair timing calculation section 10 preliminary stores a plurality of candidates of the power generation output value (for example, 100%, 95%, 90%) of the wind turbine 1 after an abnormality is detected for a part of the wind turbine 1. As these candidates, it is enough to set at least a predetermined first output and a second output smaller than the first output. The repair timing calculation section 10 repeatedly executes the operation of the STEPs S6 to S16 with switching these output value candidates in turn (STEP S20).

STEP S22: According to the above-described operation, the estimated value of the total surplus/deficit is obtained in time-series for each of the plurality of output value candidates. The repair timing calculation section 10 calculates and outputs the optimal (the total surplus/deficit is the best) power generation output and the repair timing. An operator determines the repair timing with taking the total surplus/deficit curve for each output value candidate, the optimal power generation output, and the optimal repair timing into consideration.

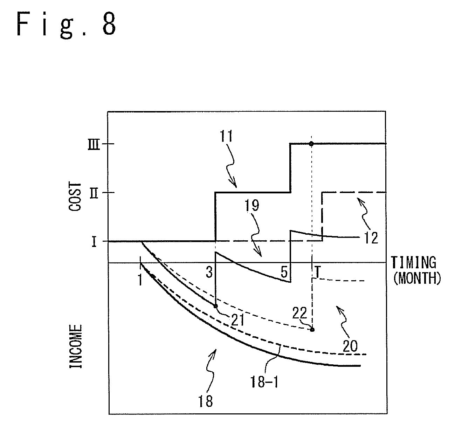

With reference to Fig. 8, an example of the repair timing decision is explained. In the example of Fig. 8, the work cost is eliminated for simplifying the explanation. The horizontal axis indicates the season. The upper half of the vertical axis indicates the repair cost. The lower half of the vertical axis indicates the summation (the value of integral) of the electricity selling income, and lower side indicates that the summation of the electricity selling income is larger. The total surplus/deficit curve 19, being the summation of the repair cost curve 11 and the electricity selling income curve 18 under the operation of 100% output of the wind turbine 1, indicates the total surplus/deficit in time-series at 100% output. The timing when the total surplus/deficit curve becomes the lowest value is the optimal timing of the total surplus/deficit. This timing is indicated as the repair timing 21. The total surplus/deficit curve 20, being the summation of the repair cost curve 12 and the electricity selling income curve 18-1 under the operation of 90% output of the wind turbine 1, indicates the total surplus/deficit in time-series at 90% output. The timing when the total surplus/deficit curve becomes the lowest value is the optimal timing of the total surplus/deficit. This timing is indicated as the repair timing 22. In the example shown in Fig. 8, the repair timing 22 in the case of 90% output indicates the repair timing at which the total surplus/deficit is the optimal. Therefore, at the STEP S22 of Fig. 7, the output of 90% is outputted as the optimal power generation output, and the repair timing 22 is outputted as the optimal repair timing.

In a case where a regular inspection of the wind turbine 1 is performed at timing relatively near the timing when the monitoring apparatus 2 detects an abnormality of a part, it is preferred that the repair of the part is performed at the same time with the regular inspection. Therefore, the total surplus/deficit calculation section 9 preliminary stores the implementation timings of the regular inspection. In such a case, the processing of the STEPs S6 to S22 in Fig. 7 is performed for the period from the timing at which an abnormality of a part is detected to the timing of the regular inspection. By this processing, the power generation output and the repair timing at which the total surplus/deficit becomes the optimal before the regular inspection is calculated. By referring to the output, an operator determines whether the repair is to be performed at the calculated timing or the repair is to be performed at the regular inspection.

In the above explanation, the estimated values of the respective months which are continuous are calculated at a predetermined time interval (for example, every month). However, the estimated value may be calculated in a different manner. For example, by calculating the estimated values of the total surplus/deficit similar to the above-explained embodiment for a plurality of candidate timings, the optimal (the total surplus/deficit is best) power generation output and the repair timing can be calculated and outputted by referring to those estimated values. The plurality of candidate timings are not required to be continuous timings. For example, in a case where the timings at which the work can be implemented are limited for some reasons, the timings at which the work can be implemented may preliminary set as the first to n-th candidate timings (n is an integer of 2 or more), and the repair candidate timing may be calculated for each of the candidate timings.

It is easily understood for those skilled in the art that the above-explained embodiments can be implemented by any combination thereof in an extent that no contradiction occurs.

The present application claims a priority based on Japanese Patent Application No. 2011-144443, which was filed on June 29, 2011, and the disclosure of which is hereby incorporated into the present application by this reference.

## Claims

1. A repair timing determination support apparatus comprising:
a repair cost storage section configured to store a repair cost estimation value being a time-series estimation value of a cost for repairing a part of a wind turbine from an occurrence of a predetermined behavior of the part to a repair of the part for a case where the wind turbine operates at a first output and a case where the wind turbine operates at a second output lower than the first output;
an electricity selling income storage section configured to store an electricity selling income estimation value being a time-series estimation value of an income from electricity selling of an electricity generated by the wind turbine for a case of the first output and a case of the second output; and
a total surplus/deficit calculation section configured to calculate and output a total surplus/deficit from the occurrence of the predetermined behavior to the repair of the part for a case where the wind turbine operates at the first output and a case where the wind turbine operates at the second output at a plurality of repairing candidate timings by referring to the repair cost storage section and the electricity selling income storage section.

2. The repair timing determination support apparatus according to claim 1, wherein the electricity selling income estimation value depends on a seasonal variation.

3. The repair timing determination support apparatus according to claim 1 or 2, further comprising:
a work cost storage section which stores a work cost estimation value being a time-series estimation value of a work cost for the repair of the part,
wherein the total surplus/deficit calculation section is configured to calculate the total surplus/deficit by including the work cost by referring to the work cost storage section.

4. The repair timing determination support apparatus according to claim 3, wherein the work cost estimation value depends on a seasonal variation.

5. The repair timing determination support apparatus according to any of claims 1 to 4, further comprising:
a repair timing calculation section configured to calculate and output a timing at which the total surplus/deficit calculated by the total surplus/deficit calculation section becomes an optimal value as an exchange timing of the part.

6. A repair timing determination support method comprising:
a repair cost calculation step of calculating a repair cost estimation value being a time-series estimation value of a cost for repairing a part of a wind turbine from an occurrence of a predetermined behavior of the part to a repair of the part for a case where the wind turbine operates at a first output and a case where the wind turbine operates at a second output lower than the first output;
an electricity selling income calculation step of calculating an electricity selling income estimation value being a time-series estimation value of an income from electricity selling of an electricity generated by the wind turbine for a case of the first output and a case of the second output; and
a total surplus/deficit calculation step of calculating and outputting a total surplus/deficit from the occurrence of the predetermined behavior to the repair of the part for a case where the wind turbine operates at the first output and a case where the wind turbine operates at the second output at a plurality of repairing candidate timings by referring to the repair cost estimation value and the electricity selling income estimation value.
